# EUROPEAN PATENT APPLICATION

(11) **EP 4 821 992 A1**
(43) Date of publication of application: **14.10.2026**
(21) Application number: 25169684.5
(22) Date of filing: 10.04.2025
(51) Int. Cl.: C09D 11/08, B33Y 70/00, C09D 11/14

(54) **RECYCABLE INK COMPOSITION**

(71) Applicant: Helmholtz-Zentrum hereon GmbH, 21502 Geesthacht (DE)
(72) Inventor: TOMA, Francesca Maria, 14167 Berlin (DE); BALK, Maria, 14974 Ludwigsfelde (DE); NEFFE, Axel Thomas, 12207 Berlin (DE); SCHROETER, Michael, 12203 Berlin (DE); DA CONCEIÇÃO, Eduardo, 12205 Berlin (DE)
(74) Representative: Gruner, Leopold Joachim

(57) **Abstract**

The present invention relates to the field of 3D printing, in particular to sustainable and recyclable ink compositions for use in 3D printing, as well as a molded body formed from the ink composition, a method for printing and recycling the molded body.

## Description

### TECHNICAL AREA

The present invention is in the field of 3D printing, in particular to the field of recyclable and sustainable ink compositions for 3D printing, as well as a molded body formed from the ink composition, a method for printing and recycling the molded body. The composition is characterized by the use of sustainable components, in particular lignosulfonate salts, modified cellulose and a biocompatible softening agent, all of which are provided as a water-soluble composition with specially adapted rheological and physical properties that make it suitable for use in 3D printing.

### STATE OF THE ART

There are several 3D printing processes known in the state of the art, relying on different processes, such as powder laser sintering, resin printing or melt printing. One approach relies on the use of liquid inks in 3D printing methods by using direct-ink writing (DIW) with special rheological properties, which allow the flow of the ink under increased pressure, while quickly solidifying after the printing to provide a stable molded object (shear thinning behavior), which can be further modified by post processing such as drying or coating steps.

Conventional materials used for 3D printing are not suitable for sustainable, circular economic applications, either relying on petrochemical products, organic solvents or co-solvents such as alcohols or having limited reusability, especially no direct recycling option. Likewise, more sustainable materials, such as bioplastics like polylactic acid (PLA), have limited reuse potential and rely heavily on chemical recycling, incineration or industrial composting as end-of-life routes. Naturally occurring alternatives to synthetic polymers, examples of bio-based polymers are derived from lignocellulosic materials, particularly lignin and cellulose derivatives. Their application has been investigated in the past, but the current scope of application is limited due to solubility and rheology challenges, the achieved print resolution or the additives and co-solvents required in the formulation of the inks.

Some approaches focus on dissolved lignin materials in organic solvents, which limits their application in a sustainable and circular manner. Approaches include organosolv lignin with chemical cross-linking as reported by Ebers et al. (EBERS, Lisa-Sophie et al. Direct Ink Writing of Fully Bio-Based Liquid Crystalline Lignin/Hydroxypropyl Cellulose Aqueous Inks: Optimisation of Formulations and Printing Parameters. ACS Appl. Bio Mater. 2020, Vol.3, No.10, pages 6897-6907, American Chemical Society, doi:10.1021/acsabm.0c00800). Another approach with citric acid crosslinking after printing was reported by Gleuwitz et al. (GLEUWITZ, F. Robert et al. Lignin in Bio-Based Liquid Crystalline Network Material with Potential for Direct Ink Writing. ACS Appl. Bio Mater. 2020, Vol.3, No.9, pages 6049-6058, American Chemical Society, doi:10.1021/acsabm.0c00661). A combined approach using organosolv lignin, cellulose nanofibers and nanocrystals has been reported by Thakur (THAKUR, Md Shajedul Hoque et al. Three-dimensional printing of wood. Science Advances 2025, Vol.10, No.11, Article No. eadk3250, American Association for the Advancement of Science, doi: 1 01126/sciadvadk3250), which requires a post-processing procedure of lyophilization, thermal stabilization at 180 °C. All these approaches are limited by the use of cross-linking agents as additives, organic solvents or energy-intensive post-processing requirements.

A number of approaches have been made to use alkali lignin. One published example is an approach to printing lignin-graphene oxide structures (ROMAN, Julien et al. Lignin-graphene oxide inks for 3D printing of graphitic materials with tunable density. Nano Today 2020, Vol.33, Article no. 100881, ISSN 1748-0132, doi:10.1016/j.nantod.2020.100881). This approach involves the use of alkali lignin and requires a complex post-processing procedure of freezing the printed structures in nitrogen or thermal treatment at 250 °C, which limits the applicability of the process. In addition, no recycling process has been investigated or demonstrated. Another approach based on alkali lignin was reported by Jiang et al. (JIANG, Bo et al. Lignin-Based Direct Ink Printed Structural Scaffolds. Small 2020, Vol.16, No.31, Article no. 1907212, ISSN 1613-6810, doi:10.1002/smll.201907212) where a soft triblock copolymer is used as the cross-linking agent. This process has the disadvantage of using synthetic polymers, which reduces the sustainability of the resulting ink formulation, and the printed objects were freeze-dried in the post-printing process, no circular or recycling approach was investigated. Another disclosure discussing different formulations with alkali lignin and cellulose derivatives was reported by Bierach et al. (BIERACH, Christopher et al. Wood-based 3D printing: potential and limitation to 3D print building elements with cellulose & lignin. Architecture, Structures and Construction 2023, Vol.3, No.2, pages 157-170, ISSN 2730-9894, doi:10.1007/s44150-023-00088-7). These approaches result in printed structures with low resolution, no recyclable composition has been reported.

The patent specification US 11.505,679 B2 discloses a number of compositions for three-dimensional printing, a method for preparation thereof and uses thereof, characterized in that the compositions are free from polylactic acid (PLA), and comprise many components, such as a resin selected from a melamine resin and/or a phenol resin, a polysaccharide and a number of organic fillers, such as cellulose or lignin. It doesn't disclose any recyclable composition.

Some further, less related applications of composite material delivery using lignin-derived materials include the liquid mixture disclosed in WO 2023/240184 A2**,** which, among other things, discloses the use of non-water-soluble lignin and a hydrocolloid, such as cellulose derivatives, starch and others, along with a gelling agent. This process does not disclose any recycling capabilities and requires a proportion that is only slightly soluble in water.

The method described in patent CN 117143936 A teaches the use of agricultural and forestry biomass waste, which includes the steps of preprocessing raw materials with alkali and glycerin and filtering, wherein the pretreated filter residues are subjected to enzymolysis. This process requires the elaborate biological fermentation of the starting materials, which, due to the process, leads to a composition that is difficult to define; recycling of the printed ink is not disclosed.

Patent specification WO 2021/083446 A1 teaches a 3D printing process and material system that includes a particulate material and a printing liquid, wherein the printing liquid comprises water or aqueous alcoholic solutions, and wherein the printing composition comprises lignosulfonate. Insoluble particles that influence the flow properties are used and the reusability of the insoluble components, but not the entire material system, is explained.

Further ink compositions, which require a further plurality of components and are not suitable for providing a reusable ink, are disclosed, for example, in patent specification US 10472529 B2**,** which relates to an ink containing a multifunctional adhesive suitable for a 3D printer. Patent specification EP 2836558 B1 teaches a biodegradable material made from biological components, comprising a protein adhesive made from at least one protein, natural fibers, and at least one hygroscopic mineral. This mixture cannot be recycled as printing ink. Another approach that uses naturally occurring materials such as cellulose materials in a powder-based 3D printer, as described in WO2020243766A1**.** A particle system is used here.

In summary, there is a lack of recyclable, sustainable, state-of-the-art liquid ink compositions that use biocompatible and/or degradable, recyclable materials, in particular directly reusable ink compositions that are soluble in water without crosslinking agents and additives and that deliver a 3D ink printable under conditions that do not require elaborate post-processing procedures, in particular freeze drying or heat treatment at high temperatures (over 150 °C and above).

### OBJECTION OF THE INVENTION

The object of the present invention is to address a significant deficiency in this area, which is the lack of a suitable recyclable ink composition that can be used in multiple printing cycles. In particular, this should be achieved without the need for co-solvents that are lost during the drying process and therefore lost or must be recovered with great effort. Furthermore, the ink composition should consist of readily available, renewable materials and result in printed articles that exhibit appropriate dissolution and cohesion and are suitable for various applications, such as furniture/utility item manufacturing or rapid prototyping.

### SOLUTION

The problem is solved by a recyclable ink composition according to claim 1. The invention further discloses a method for providing and printing the ink composition, a molded body formed from the ink, and a method for recycling the molded body into an ink composition.

Further advantageous embodiments and further developments are shown in the subclaims and in the description with reference to the figures.

### GENERAL ADVANTAGES

The invention provides a sustainable, recyclable ink composition based on naturally derived materials that is water-soluble, does not require chemical crosslinking, and can be dried and printed at room temperature or at moderate temperatures (20 °C to 100 °C). In addition, it can be redissolved multiple times in water, creating a directly reusable composition. The shear-thinning behavior of the composition enables liquefaction during the 3D liquid ink printing process and solidification in the printed state, resulting in printed moldings with finer resolution and structures. Shrinkage is also optimized, resulting in high dimensional stability.

Furthermore, the current invention allows the ink composition to be used in a circular manner, whereby the liquid ink composition and the solid molded body can be converted into one another by the printing and recycling process disclosed herein. The good physical properties of the molded body are also a result of the optimization process of the ink composition and are directly related to it.

### DETAILED DESCRIPTION

The present invention relates to a recyclable ink composition, comprising the following components
a) 50 to 90 wt%, preferably 55 to 85 wt%, more preferably 60 to 80 wt%, most preferably between 70 to 80 wt%, of a water-soluble bio-derived polymer, wherein the water-soluble bio-derived polymer is a lignosulfonate salt selected from the list consisting of sodium, potassium, calcium lignosulfonate or a combination thereof,
b) 5 to 30 wt%, preferably 7.5 to 25 wt% of a rheologic modifier, wherein the rheologic modifier is a water-soluble cellulose derivative, preferably methyl cellulose, hydroxypropyl methyl cellulose, wherein the water-soluble cellulose derivative has a solubility of 1.5 wt% to 30 wt% in water at 25 °C,
c) 5 to 30 wt%, preferably 10 to 25 wt% of a biocompatible softening agent, preferably glycerin and/or citric acid alkyl esters,
d) 0 to 5 wt% of an additional water-soluble additive, preferably selected from the list consisting of flame retardant, colorant, pH regulator, anti-precipitant additive,
wherein the components add up to 100 wt% by mass, and wherein the composition is dissolved in water in a mass ratio of 2:1 to 1:2 (water:ink), and wherein the dissolved composition is configured for 3D printing. In particular, the present ink composition offers significant technical advantages over the prior art. By employing materials directly sourced from naturally occurring and renewable resources, the ink composition, also referred to as "formulation", substantially reduces reliance on fossil-based feedstocks and contributes to a more sustainable production process. Moreover, the selection of lignosulfonate salts as bio-derived polymers, derived from waste lignin, as well as water-soluble cellulose derivatives, not only ensures excellent rheological properties but also promotes robust physical crosslinking via hydrophobic interactions and hydrogen bonding. This tailored formulation enables a controlled transition between viscoelastic liquid and solid states, thereby facilitating high-precision direct ink writing without the need for energy-intensive post-processing.

In the following description, particularly in the examples and figures, the ink composition according to the present invention may be denoted as:

IC(AA/BB/CC/D):W;

wherein:
- AA represents the weight percentage (wt%) of the water-soluble bio-derived polymer as a lignosulfonate salt;
- BB represents the wt% of the rheologic modifier as a water-soluble cellulose derivative;
- CC represents the wt% of the biocompatible softening agent;
- D represents the wt% of any additional water-soluble additive(s); and
- W represents the mass ratio of ink composition to water (IC:W) in the water-dissolved composition, wherein the ink composition has the ratio of 1.

For example, an ink composition comprising 70 wt% calcium lignosulfonate, 18 wt% methylcellulose, 12 wt% glycerin, and 0 wt% additional water-soluble additives, when dissolved in water at a water:ink mass ratio of 1:1 (corresponding to 50 wt% water), is denoted as IC(70/18/12/0):1.

In embodiments referring to the molded body, additional water content is generally not specified unless required by the context.

Furthermore, the complete water solubility of the ink components enables the printed objects to be fully recyclable by dissolution in water, thus realizing a closed-loop, circular lifecycle for the manufactured products. This recyclability, combined with the use of economically viable and biomass-derived constituents, results in a cost-effective and environmentally friendly solution that addresses both material waste and energy efficiency challenges in additive manufacturing.

"Recyclable" in the sense of the present invention refers to the property of the liquid ink to be converted into a solid molded body, which can be restored by redissolving in water, preferably in a plurality of cycles, such as 10, 20, 30, 50 or 100 cycles, in particular when used in accordance with a printing method and a recycling method as disclosed herein. The advantage of this is that the product can be reused over several cycles, for example for prototyping, and that a second life of the product is possible in a circular economy application without the need for industrial recycling processing using solvents or chemical/thermal degradation of the components.

In a preferred embodiment, the ink composition according to the present invention exhibits a reduction in viscosity in a range from 50 % to 99 %, more preferably between 60 % and 98 %, when the shear rate is increased from 0.1 s⁻¹ to 10 s⁻¹, as determined by shear oscillation measurement. This reduction in viscosity facilitates a transition from a viscous state to a more fluid state during the 3D printing process, thereby enhancing the processability of the ink composition.

In a further preferred embodiment, the ink composition exhibits a crossover point in oscillatory shear measurements at an oscillation strain in a range from 5% to 20%. At oscillation strains below this crossover point, the storage modulus (G') exceeds the loss modulus (G"), whereas at oscillation strains above the crossover point, the loss modulus (G") exceeds the storage modulus (G'). This is an important characteristic allowing the use as a 3D-ink, marking the change between liquid like and solid like behavior. In particular, this property ensures that the ink composition flows readily under shear stress during deposition and rapidly solidifies when the shear is removed, contributing to high printing precision, excellent dimensional stability of the printed molded body.

Furthermore, the current invention pertains to the use of the ink composition for printing a molded body that is fully recyclable and recoverable. In this preferred embodiment, the printed molded body can be recycled by redissolving it in water to re-obtain the original ink composition, thereby enabling a closed-loop recycling process.

A "lignosulfonate salt" according to the present invention is an alkali and/or alkaline earth metal salt of a lignosulfonic acid, obtained from naturally occurring lignin by treatment with sulfite and/or bisulfite salts, also referred to as sulfite process, and preferably selected from the group consisting of sodium, potassium and calcium lignosulfonates, or mixtures thereof. In particular, the lignosulfonate salt may be obtained directly by treatment of naturally occurring lignocellulosic materials or, by treatment of kraft lignin (or alkali lignin) with sulfite and/or bisulfite salts. Since the lignosulfonate salt is a partially synthetic product derived from a naturally occurring macromolecule, it is provided in a purity of at least 80 %, preferably at least 90 %, and may further comprise other counter ions and organic side products. The purity can be determined by spectroscopic analysis, such as ICP-OES for inorganic contaminants and elemental analysis coupled in combination with HPLC-MS for organic contaminants.

In some preferred embodiments, a lignosulfonate salt is derived from the sulfite process and has an average molecular weight of 1,000 to 140,000 g/mol. This allows for the use of an abundant, sustainable and biodegradable source for a printable ink composition.

In some alternatively preferred embodiments, a lignosulfonate salt is derived from kraft lignin by reaction with sulfite and/or bisulfite salts. This sulfonated kraft lignin tends to have a lower average molecular weight of 2,000 to 15,000 g/mol. It is a more abundant source of lignosulfonate salts.

The following chemical formula represents a possible fragment of a lignosulfonate salt macromolecular structure (Lig) according to the present invention. In the formula, the dashed lines indicate connection points to further fragments (or parts) of the lignosulfonic macromolecular structure. Each sulfonic group (-SO³⁻), which is preferably located on benzylic and/or aliphatic side chain positions, imparts a negative charge. Accordingly, the salt comprises counter cations, here indicated as Mⁿ⁺ (where "n" denotes the valence), preferably selected from the group consisting of sodium (Na⁺), potassium (K⁺), calcium (Ca²⁺), magnesium (Mg²⁺) and iron (Fe³⁺). Preferably, the lignosulfonate salt is electrically neutral, that is, it exhibits a net charge of zero.

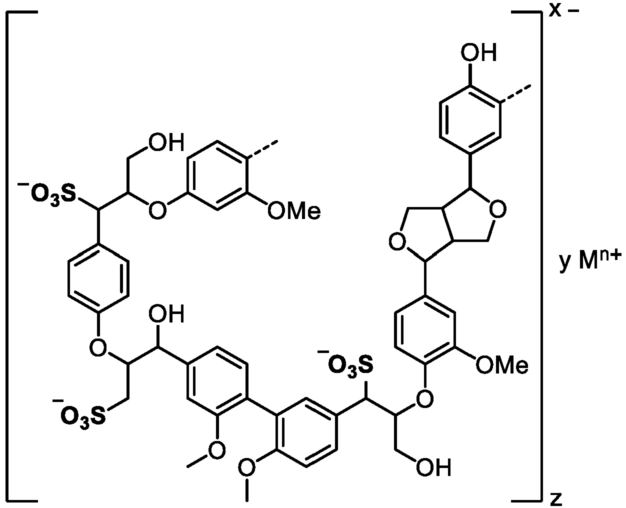

Therefore, a lignosulfonate salt according to the present invention may be represented by the formula:

M_{y}[Lig(SO₃)ₓ]_{z},

wherein "y · n = x · z" corresponds to the stoichiometric ratio between the total positive charge provided by the counter cations (y · n, with Mⁿ⁺ having a valence of n) and the total negative charge contributed by the x sulfonic groups per lignosulfonate fragment (Lig) multiplied by the number z of segments (or fraction thereof). For example, for lignosulfonate fragments having a mean number of x = 3 sulfonic groups, there are preferably 3 singly charged metal cations, 1.5 doubly charged metal cations, or 1 triply charged metal cation per segment.

Preferably, a lignosulfonate salt according to the present invention has a sulfur content of 2.0 to 10 wt%, in particular between 4 and 9 wt%, and most preferably between 4.5 and 8 wt%, as determined by elemental analysis (EA).

Alternatively, the lignosulfonate salt preferably comprises from 0.1 to 1.2 sulfonate groups per phenylpropanoid (C₉) unit, more preferably between 0.3 and 0.8 sulfonate groups per C₉ unit, as determined by conductometric titration of the free acid form of the lignosulfonate salt against a strong base, such as sodium hydroxide. This enables a high solubility in water, which is necessary for an efficient printing process, without the composition of the molded body formed by the printed ink shrinking.

A "water-soluble cellulose derivative" refers to a modified cellulose macromolecule used as a binder in the ink composition. The derivative exhibits a solubility of from 1.5 wt% to 30 wt% in water at 25 °C and enhances the ink's rheological properties by promoting robust physical crosslinking via hydrophobic interactions and hydrogen bonding.

The term "cellulose derivative" denotes cellulose in which one or more hydroxy groups are substituted with a substitution group, preferably selected from the group consisting of methyl, ethyl, and hydroxypropyl. The following formula represents cellulose(C₆H₁₀O₅)ₙ according to the present invention, wherein "R" denotes functional groups that may be independently substituted; when all R = OH, the polymer is unmodified cellulose. Each hydroxy residue is capable of substitution.

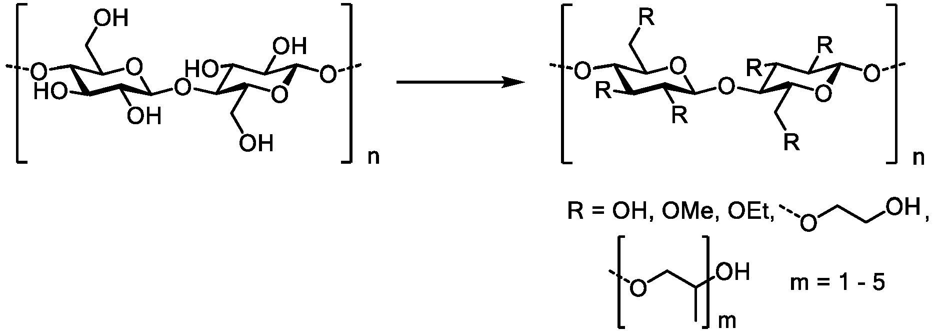

In preferred embodiments, the water-soluble cellulose derivative has a degree of substitution (DS) of between 0.5 and 2.8, more preferably between 1.0 and 2.7, based on the three hydroxy groups per anhydroglucose (C₆H₁₀O₅) unit (with a theoretical maximum DS of 3). This range enables the derivative to dissolve in water at room temperature and to facilitate robust physical crosslinking via hydrophobic interactions and hydrogen bonding.

In some preferred embodiments, the cellulose derivative is represented by the stoichiometric formula:

(C₆H₍₁₀₋ₓ₎RₓO₅)ₙ,

wherein x is from 0.5 to 3, and each substituent R is independently selected from the group consisting of methyl, ethyl, hydroxyethyl, 2-hydroxypropyl, oligo-2-hydroxypropyl or a combination thereof. Here, "oligo-2-hydroxypropyl" refers to hydroxypropyl side chains having from 1 to 5 repeating units, which are introduced by reacting cellulose or methyl cellulose (with a degree of substitution below 3) with propylene oxide. These embodiments offer a controllable solubility range and enable fine-tuning of the ink composition for various applications.

Most preferably, the water-soluble cellulose derivative is selected from the list consisting of methyl cellulose (MC), ethyl cellulose (EC), hydroxyethyl cellulose (HEC), hydroxypropyl cellulose (HPC), methyl ethyl cellulose (MEC), hydroxyethyl methyl cellulose (HEMC), hydroxypropyl methyl cellulose (HPMC), ethyl hydroxyethyl cellulose. This selection is particularly suitable for controlling and modifying the rheological properties of the water dissolved ink composition.

In some preferred embodiments, the water-soluble cellulose derivative has a molar mass ranging from 5,000 to 500,000 g/mol, more preferably from 10,000 to 250,000 g/mol.

In some alternative embodiments, the cellulose derivative (C₆H₍₁₀₋ₓ₎RₓO₅)ₙ has a monomer repetition number (n) of from 100 to 5,000, preferably from 500 to 2,500.

A "softening agent" according to the present invention is a biocompatible, water-soluble compound that, when incorporated into the ink composition, modulates its rheological properties by adjusting viscosity, and has hydroscopic properties, therefore providing a molded body with good mechanical properties and prevents the printed structures from becoming brittle after the drying step, which enables to achieve optimal printability and structural stability. Preferably, it is a natural compound or directly derived, such as by an esterification reaction, from a natural compound.

"Biocompatible" in the sense of the present invention refers to the properties of a substance or material that relate to properties such as "non-toxic", "biodegradable" and "derived from renewable, natural substances". These components are specifically selected so that they do not negatively influence the ecological footprint of the ink composition and qualify it for sustainable use.

In particular, the softening agent is selected from the group consisting of glycerin, sorbitol, and citric acid alkyl esters, such as methyl, ethyl, propyl and isopropyl citric acid esters. The softening agent is added in an amount effective to tailor the ink's flow characteristics during direct ink writing and the mechanical properties of the molded body, in particular in a range of 5 to 30 wt%, more preferably 8 to 25 wt%, thereby enhancing both the processability and full recyclability of the printed objects.

A preferred embodiment of the citric acid alkyl ester is represented by the following Markush formula: 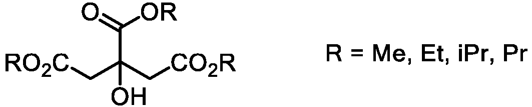 wherein "R" is independently selected from the group consisting of methyl (Me), ethyl (Et), isopropyl (iPr), and propyl (Pr).

Most preferably, the softening agent is glycerin and/or triethyl citrate. Both softening agents are food-grade additives (E 422 / E 1505) and biocompatible, further enhancing the sustainable properties of the ink composition.

Shear oscillation measurements were performed on the water-dissolved ink compositions using a rotational rheometer equipped with a suitable geometry (e.g., cone-plate or plate-plate). Measurements were conducted at various resting times (e.g., 3, 30, 60, and 90 minutes) after ink preparation. Both amplitude sweeps (constant frequency with increasing stress) and frequency sweeps (constant stress with increasing frequency) were executed to record viscosity, storage modulus (G'), and loss modulus (G") as functions of shear rate or oscillation strain.

Infrared (IR) absorption spectra were recorded over a spectral range from approximately 4000 to 650 cm⁻¹ at a resolution of about 2 cm⁻¹. Measurements were obtained for both the freshly prepared water-dissolved ink and for printed molded bodies after drying.

Mechanical properties of printed molded bodies were determined using a universal tensile tester equipped with a temperature-controlled chamber. Stress-strain curves were recorded by subjecting samples to uniaxial tensile loading at a constant deformation rate until breakage. From these curves, elongation at break (*ε_{b}*) and Young's modulus (E) were derived, with each measurement being an average of multiple tests.

The surface and cross-sectional morphologies of printed objects were examined using scanning electron microscopy (SEM) after appropriate sample preparation, such as vacuum drying and sputter-coating with a thin conductive layer. Additionally, micro-computed tomography (µCT) was utilized to analyze the three-dimensional porous structure of the printed objects. Samples were scanned at high resolution, and the acquired images were processed using established thresholding and segmentation algorithms to quantitatively determine parameters such as pore size, porosity, and pore density.

The current invention pertains to a process for manufacturing an ink composition. In a process for manufacturing an ink composition according to the current invention comprises or consists of the steps of
a) Providing the components, in particular in defined amount and properties as defined herein,
b) Mixing and preferably grinding the components,
c) Dissolving the components in water, then
d) Maturing the solution for a fixed amount of time, preferably between 10 min and 5 h, then
e) Transferring the water dissolved ink composition into a storage container, such as an ink cartridge, and/or directly printing the composition.

This process for manufacturing an ink composition that not only produces a highly homogeneous water-dissolved mixture but also offers the technical benefit of enabling a closed-loop recycling cycle. This process is closely related to a process for recycling the ink composition.

"Maturing" in the sense of the current invention refers to a step in which a physical cross-linking is achieved, preferably by waiting at room temperature. Measurements, in particular shear thinning measurements, have demonstrated that this step is important to provide optimal rheological properties before using the ink composition prior to a printing process.

The invention further pertains to a process for printing a recyclable ink composition comprising or consisting of the steps of:
a) Providing the water-dissolved ink composition according to the current invention; preferably as an ink cartridge,
b) Supplying a dispensing tip and a pressure source, preferably selected from the group consisting of a compressed gas, extruder, or piston;
c) Applying a pressure sufficient to induce a solid-to-liquid transition, preferably corresponding to an oscillatory strain between 5% and 20%;
d) Printing the water-dissolved ink composition using a printing machine at a nozzle velocity ranging from 0.5 mm/s to 10 mm/s; and
e) Drying the printed ink composition to obtain a molded body by inducing a water loss of preferably between 90 and 99.9 wt%, preferably for 10 to 40h at room temperature.

This printing process offers a number of advantages over the prior art, in particular the possibility of drying the printed structures at room temperature, since the processes known in the art often require post-processing, such as drying at elevated temperatures, chemical crosslinking after printing or freeze-drying of the printed structures. This process utilizes the synergistic effects of combining the components of the ink composition as disclosed herein and provides an improved printing process that also provides a recyclable printed article that can be printed with this process over multiple cycles. By using a preferred oscillating strain between 5% and 20%, the ink composition can exhibit a transition point between solid and liquid behavior, which allows finer printing structures due to rapid solidification after exiting the nozzle.

A "water loss" as used herein refers to the loss of water added to the ink composition, therefore a loss of 99.9% water equals to a nearly absolute loss of water. The residual water content (after the water loss) would be higher than 0.1% in this example because the components have an inherent water content. For example, glycerin is hygroscopic, which leads to a defined water retention that also prevents swelling of the printed molded body. A water loss is preferably determined gravimetrically by measuring the weight of the printed molded body during the drying process.

In a preferred embodiment, the process further comprises applying a coating, preferably a wax coating, to the printed molded body after the drying step. This coating application provides an additional layer of protection against excessive moisture uptake under ambient conditions after the drying step and enhances the dimensional stability of the molded body.

A "wax coating" in the context of the current invention is applied to the surface of the printed molded body after the drying step. In one preferred embodiment, the wax coating comprises a wax material selected from the list consisting of beeswax, paraffin wax, carnauba wax, or a combination thereof, and is preferably applied as a continuous, uniform film. Preferably a wax coating is applied by heating the wax beyond the melting point and then dipping the printed structure into the wax.

In a further preferred embodiment, the wax coating is applied by methods such as dipping, spraying, or brushing, ensuring a controlled coating thickness that does not interfere with the subsequent recycling process of the molded body into the original ink composition.

The invention further pertains to a printed molded body, which is obtained directly from the recyclable and recoverable ink composition by the printing process, optionally including the coating step as described. The printed molded body exhibits a residual water content in a range from 0.1 to 7.5 wt%, preferably 0.1 and 5.0 wt%, thereby ensuring that the molded body is sufficiently hardened while retaining its ability to be fully recycled by redissolution in water. The water content can be determined with thermogravimetric analysis (TGA).

In some embodiments of the printed molded body obtained directly from the recyclable ink composition, the molded body exhibits a tunable Young's modulus (E) in a range from 2.0 MPa to 150 MPa, preferably between 2.0 MPa to 125 MPa. This adjustable modulus (E) is directly related to softening agent content and can therefore be configured for a wide range of applications.

In some preferred embodiment, the printed molded body exhibits a porosity in a range from 5 % to 30 %, preferably between 8 % to 25 %, which contributes to weight reduction and optimized dimensional stability, as well as reducing the shrinking process.

In a further preferred embodiment, the printed molded body further comprises a moisture protective coating, preferably a wax coating selected from the list consisting of beeswax, paraffin wax, carnauba wax, or a combination thereof, preferably applied as a continuous film to enhance moisture resistance while maintaining the body's recyclability.

Furthermore, the molded body is characterized by temperature resistance, also referred to as thermal stability, as determined by TGA measurements. The printed body is preferably stable between 0 °C and 250 °C, even more preferably between 0 °C and 200 °C, whereby the thermal stability refers to the property of chemical stability without irreversible damage over a longer period of time, e.g. one day. The thermal stability of the molded body is an important feature, as it ensures the material's resistance to deformation, cracking and structural degradation, making it a long-lasting and reliable choice for a wide range of applications.

Furthermore, the present invention relates to a process for recycling a molded body, comprising or consisting of the steps of:
a) optionally removing the coating by a suitable stripping agent or process;
b) grinding the molded body; and
c) dissolving the ground molded body in water, preferably followed by removal of excess water to reestablish a water content corresponding to that of the recyclable ink composition as disclosed herein.

This efficient recycling process not only maintains the printability and performance consistency of the ink composition across multiple cycles but also minimizes the need for harsh chemicals and high-energy inputs. As a result, the process contributes to an energy-efficient, closed-loop manufacturing cycle that reduces material waste and supports sustainable, circular economic applications.

"Grinding" of the shaped body in the sense of the present invention describes the process of breaking the molded body into a particular material, referred to as "ground molded body", thereby greatly increasing the surface area and thus allowing a rapid dissolution step. Grinding can be carried out using a suitable tool, such as a mortar, a mill or an industrial grinding machine.

In some preferred embodiments, the recycling process for coated molded bodies combines step a) to c) by grinding or crushing the molded body, dissolving it in water and removing the coating by a filtration process.

In another preferred embodiment, the step of re-establishing the water content consists of first removing the water completely, resulting in a dry composition, then redissolving the dry components in a controlled manner. This is particularly preferred in embodiments where the molded body is coated, and an excess of water is used for the dissolvement step.

Certain terms and derivations thereof are used in the following description for convenience only and are not intended to be limiting. For example, words such as "up", "above", "upward", "down", "below", "downward", "left" and "right" refer to directions in the drawings to which reference is made, unless otherwise indicated. Similarly, words such as "inward" and "outward" refer to directions directed toward or away from the geometric center of a device or area or specific parts thereof. References in the singular include the plural and vice versa, unless otherwise indicated.

Unless otherwise specified, all percentages or ratios refer to mass percentages (wt%) for solid mixtures or solids in liquids, and to volume percentages (vol%) for liquid mixtures.

Finally, it should be noted that all features mentioned in the application documents and in particular in the dependent claims, despite the formal reference made to one or more specific claims, should also be granted independent protection individually or in any combination.

Further advantages, features and possible applications of the present invention are also apparent from the following description of embodiments and the drawings. All the features described and/or illustrated form the object of the present invention, either individually or in any combination, even independently of their summary in the claims or their references.

The features mentioned in the claims and in the description can each be essential to the invention individually or in any combination.

In addition, it should be noted that the skilled person will undoubtedly recognize that the individual features described in the specific embodiments above can be combined with each other in an appropriate manner, provided that there is no contradiction, whereby a separate description of various possible combinations is dispensed with in order to avoid unnecessary repetition.

### FIGURE DESCRIPTION

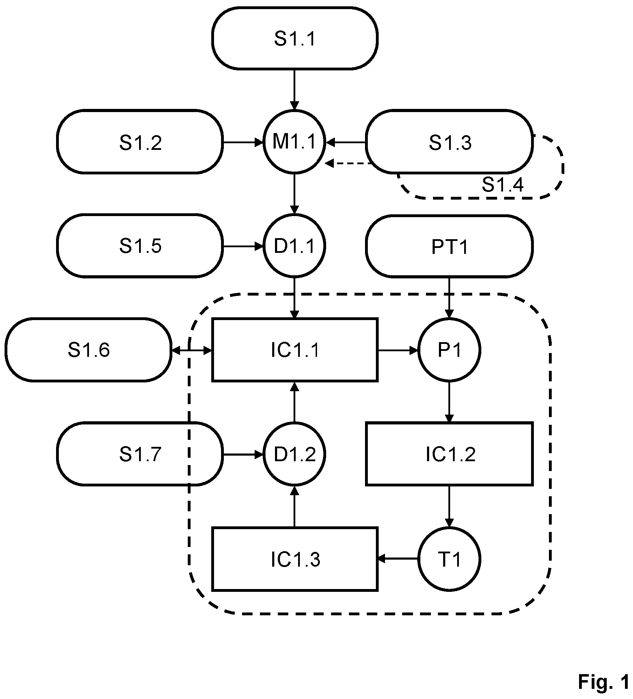

- **Fig. 1**: illustrates an exemplary process for manufacturing and printing a water-dissolved ink composition (C1.1) and subsequently recycling the molded body (IC1.2). The process comprises manufacturing steps (M1.1 & D1.1) and a printing step (P1).

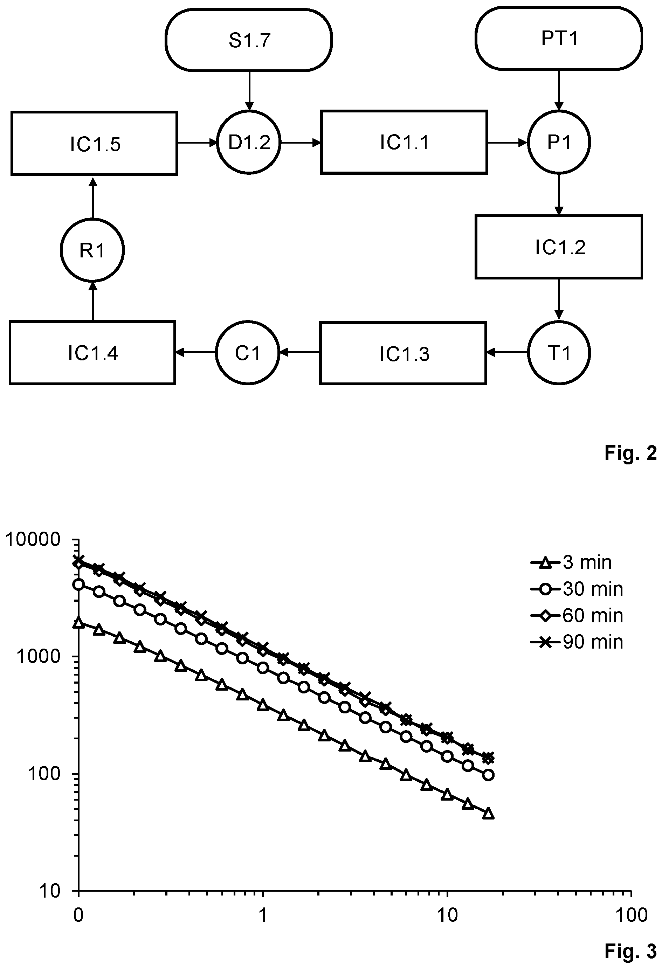

- **Fig. 2**: illustrates an alternative printing process for the water-dissolved ink composition (C1.1) that includes additional coating (C1) and decoating (R1) steps for the coated ink composition (IC1.4), followed by the recycling (D1.2) of the resulting uncoated molded body (IC1.4).
- **Fig. 3**: shows shear oscillation measurements as a function of shear rate and time for the ink composition IC(70/18/12/0):1, demonstrating its shear-thinning behavior. Measurements are provided for four resting times (3, 30, 60, and 90 minutes) on a logarithmic scale, with the y-axis representing viscosity [Pa·s] and the x-axis representing shear rate [s⁻¹].

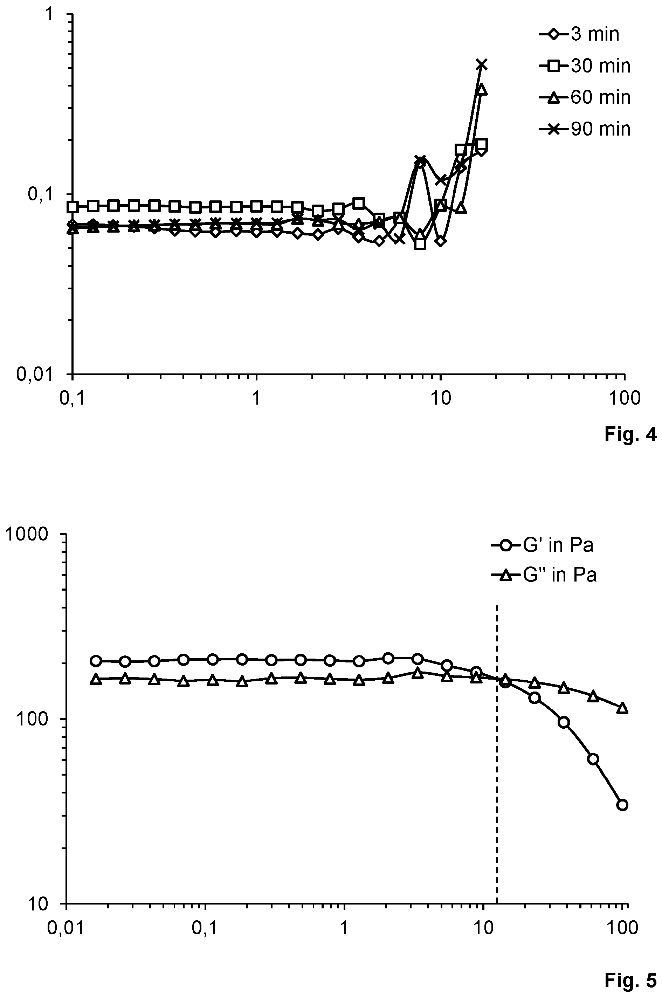

- **Fig. 4**: shows shear oscillation measurements for an ink composition without a water-soluble cellulose derivative as binder (IC(80/0/20/0):1). Data are shown for four resting times (3, 30, 60, and 90 minutes) on a logarithmic scale (base 10), with the y-axis indicating viscosity [Pa·s] and the x-axis indicating shear rate [s⁻¹].
- **Fig. 5**: shows shear oscillation measurements for the ink composition IC(70/18/12/0):1 on a logarithmic scale (base 10), highlighting the crossover point between the storage modulus (G') and the loss modulus (G"). The y-axis represents modulus [Pa] and the x-axis represents oscillation strain [%].

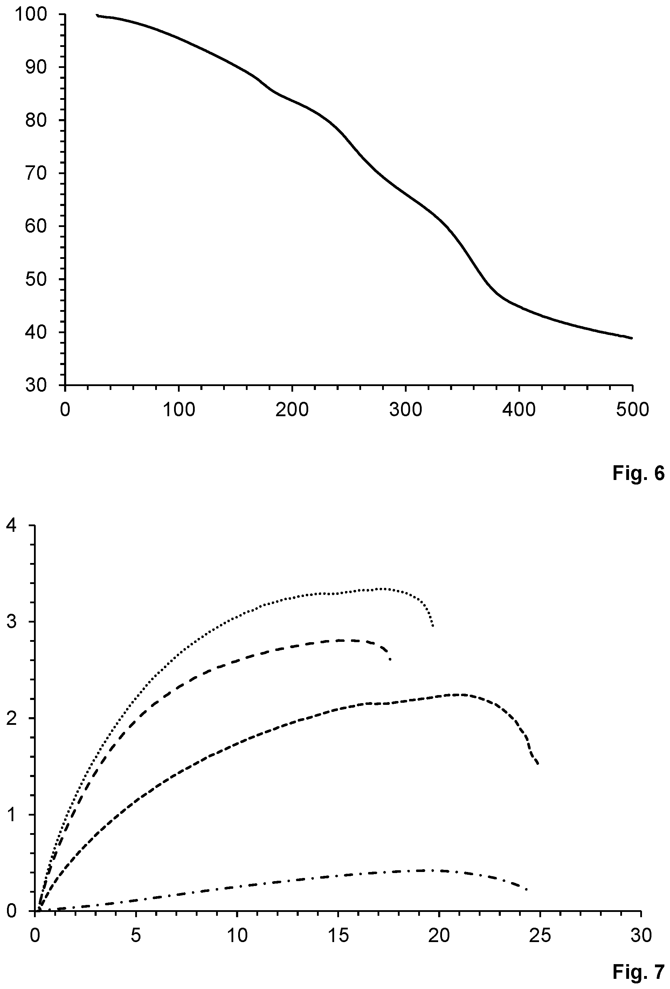

- **Fig. 6**: shows a thermogravimetric analysis (TGA) of a printed body produced from the ink composition IC(70/18/12/0):1. The y-axis represents the remaining mass percentage, and the x-axis represents temperature [°C].
- **Fig. 7**: shows the mechanical properties of printed molded bodies as a function of the ink composition via a stress-strain curve. The y-axis denotes stress [MPa] and the x-axis denotes strain [%].

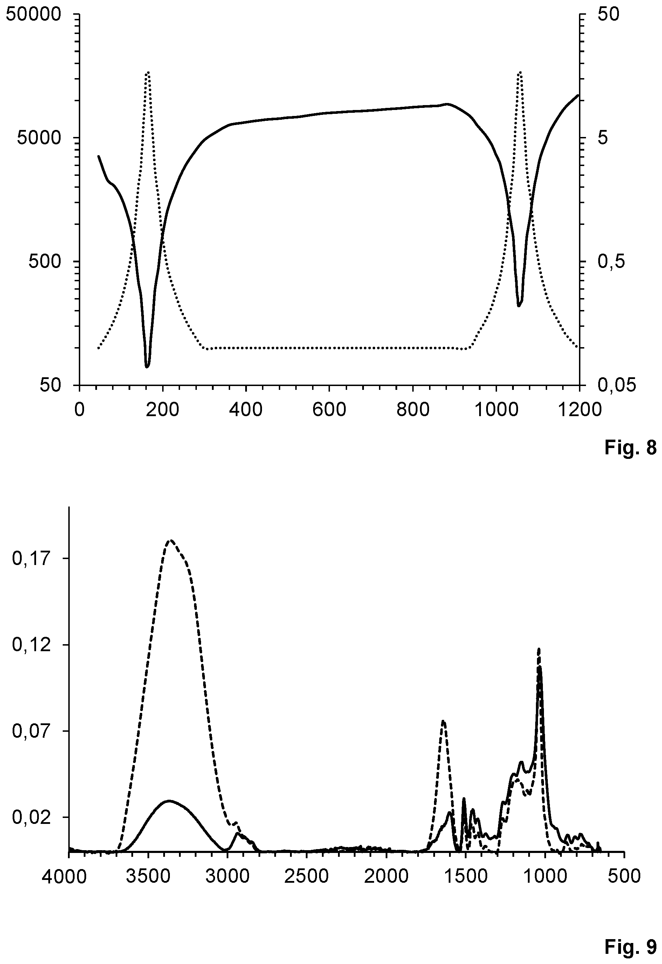

- **Fig. 8**: shows viscosity measurements as a function of shear rate and time for the ink composition IC(70/18/12/0):1. The figure demonstrates that viscosity decreases with increasing shear rate and recovers upon reducing the shear rate; under constant shear, viscosity increases over time. Data are presented on a logarithmic scale (base 10), with the left y-axis showing viscosity [Pa·s], the right y-axis showing shear rate [s⁻¹], and the x-axis showing time [s].
- **Fig. 9**: shows infrared (IR) spectroscopy measurements of the water-dissolved ink composition IC(70/18/12/0):1 in the wet state (90 minutes after preparation) and of a corresponding printed molded body after 2 days of drying (IC(70/18/12/0)). The y-axis represents absorbance (arbitrary units), and the right-hand axis indicates the wavenumber [cm⁻¹].

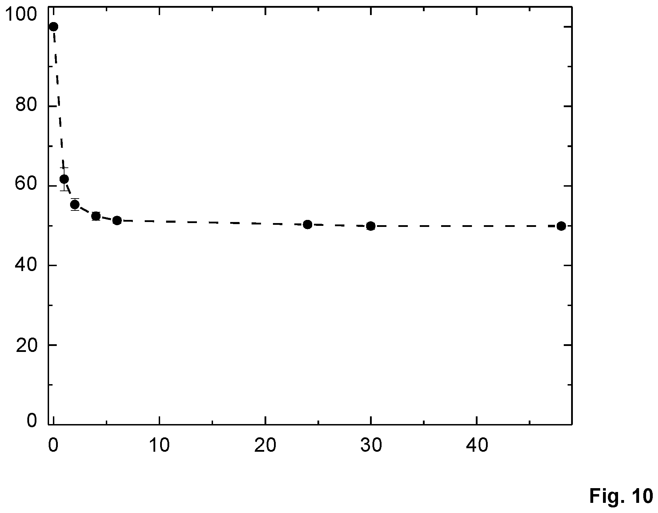

- **Fig. 10**: shows a drying kinetics of a printed ink composition (IC(70/18/12/0):1) at room temperature. The y-axis mass loss [%] and the x-axis denotes time [h].

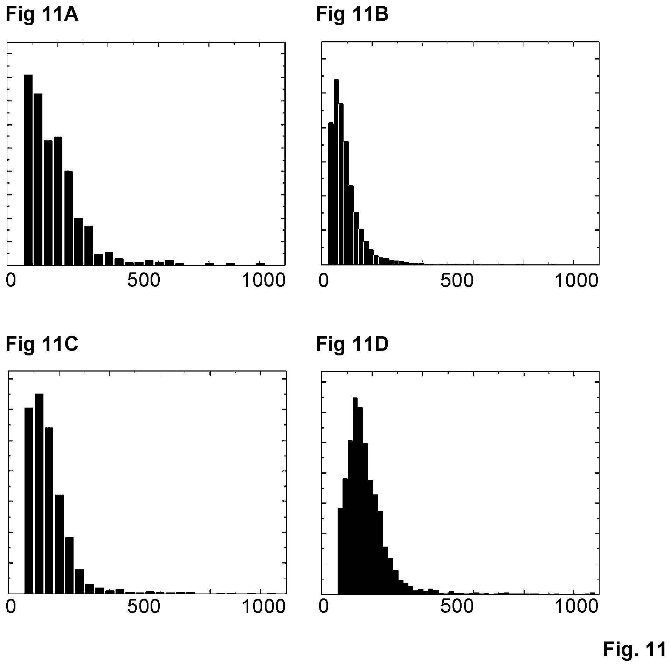

- **Fig. 11**: shows pore sizes and distribution of pores based on µCT measurements for 4 different printed ink compositions, wherein 11A corresponds to IC(70/12/18/0); 11B to IC(70/15/15/0); 11C to IC(70/18/12/0); and 11D to IC(70/20/10/0). The y-axis relative number of pores [mm⁻³] and the x-axis denotes pore size [µm].

### Example 1: water-dissolved ink composition

This first exemplary embodiment relates to the process of producing an ink composition according to the current invention, as exemplary depicted in Fig. 1. Herein, waste-derived lignin as calcium lignosulfonate (Carl Roth, Karlsruhe, Germany; the source of the obtained LS is sold directly as waste from paper industry without further processing), methyl cellulose (Mₙ = 160,000 g/mol, Carl Roth, Karlsruhe, Germany), glycerol (Honeywell / Riedel-de Haën, Seelze, Germany), and beeswax (Carl Roth, Karlsruhe, Germany) were used as received without further purification.

The ink composition was prepared by combining lignocellulose salt, herein calcium lignosulfonate (CAS: 8061-52-7) in a purity of >93% with a sulfur content of 7 wt%, pH value of 4.5 ±0,5 (10 % solution), 5 wt% Ca content, provided from a storage vessel (S1.1) methyl cellulose with a molecular weight of 160,000 g/mol, provided from a second storage vessel (S1.2), and glycerin, provided by a third storage vessel (S1.3) in different mass ratios according to the following table:

**Table E-1: Exemplary ink compositions according to the current invention**

| No. | Formula | Calcium lignosulfonate | methyl cellulose | Glycerin |
|---|---|---|---|---|
| E1-1 | IC(70/12/18/0) | 70 wt% | 12 wt% | 18 wt% |
| E1-2 | IC(70/15/15/0) | 70 wt% | 15 wt% | 15 wt% |
| E1-3 | IC(70/18/12/0) | 70 wt% | 18 wt% | 12 wt% |
| E1-4 | IC(70/20/10/0) | 70 wt% | 20 wt% | 10 wt% |

The components were mixed and homogenized (M1.1) then water was added in a mass ratio of 1:1 (water:ink), wherein all solids were dissolved (D1.1). The water dissolved ink compositions were allowed to create physical crosslinks (waiting time was 1 hour) prior to use.

### Example 2: Printing of a water dissolved ink composition

In this example of Example 1, the ink compositions (IC1.1) were printed (P1) according to the process shown in Figure 1. For the printing process, the freshly prepared ink compositions (P1.1) of Example 1 were filled into 30 cm³ polyethylene cartridges (S1.7) equipped with a Luer lock adapter and a pressure source adapter (PT1). A conical dispensing tip with an inner diameter of 0.8 mm, 0.4 mm or 0.2 mm was placed in the Luer lock adapter. The cartridge (S1.7) was placed on the dispensing head of a 3D dispenser and the ink composition was printed (P1) to form a printed ink composition (IC1.2). The objects were produced with the following technical printing parameters: nozzle diameter = 0.8 mm, 0.4 mm or 0.2 mm; air pressure between 1.7 and 4.0 bar (depending on the viscosity of the inks and the nozzle diameter), nozzle speed = between 4 mm/s and 1.5 mm/s (depending on nozzle diameter), film thickness = 1 mm, 0.5 mm or 0.3 mm (depending on nozzle diameter) and strand spacing = 1.6 mm, 0.8 mm or 0.4 mm (depending on nozzle diameter).

The printed ink composition (IC1.2) is hardened by drying at room temperature for 2 days to yield a molded body (IC1.3). The mass loss was exemplary determined in a printed line arrangement as a simple embodiment of a printed body and was measured by determining sample mass at predetermined intervals (e.g., 1, 2, 4, 6, 24, 30, and 48 hours) post-printing, as illustrated in Fig. 10. Herein, after 24 hours, a residual mass of 50.3 ± 0.6% was recorded, which corresponds to a water content of about 0.3 wt% in the printed molded body after drying.

The mechanical properties of the molded bodies (IC1.3) of the water-dissolved ink compositions of example 1 (E1-1 to E1-4) were determined using a universal tensile tester equipped with a temperature-controlled chamber. Stress-strain curves were recorded by subjecting samples to uniaxial tensile loading at a constant deformation rate until breakage. From these curves, elongation at break (*ε_{b}*) and Young's modulus (E) were derived, with each measurement being an average of multiple tests. Additionally, micro-computed tomography (µCT) was utilized to analyze the three-dimensional porous structure of the printed objects. Samples were scanned at high resolution, and the acquired images were processed using established thresholding and segmentation algorithms to quantitatively determine parameters such as pore size, porosity, and pore density (see table E2).

**Table E2: Mechanical properties of printed molded bodies**

| No. | Formula | *E* [MPa] | *ε_{b}* [%] | Porosity [%] |
|---|---|---|---|---|
| E1-1 | IC(70/12/18/0) | 2.4 ± 0.6 | 24.3 ± 7.8 | 11.6 |
| E1-2 | IC(70/15/15/0) | 49.4 ± 8.5 | 25.9 ± 2.5 | 14.7 |
| E1-3 | IC(70/18/12/0) | 67.8 ± 8.6 | 17.8 ± 0.8 | 19.3 |
| E1-4 | IC(70/20/10/0) | 106.9 ± 17.3 | 20.8 ± 2.2 | 16.6 |

### Example 3: Recycling process of a printed molded body

In this example, the printed molded bodies (IC1.3) obtained by the printing process of example 2 were finely ground in a suitable device, herein a mill, transferred to a beaker and mixed with water at a 1:1 mass ratio. The components were thoroughly mixed until a water-dissolved ink composition (IC1.1) was obtained by dissolution of the solids (D1.2). The ink was allowed to form physical cross-links for one hour. The recycled ink composition (IC1.1) was filled into polyethylene cartridges and reused for printing (P1).

### Example 4: Coated ink composition

In this embodiment of the preceding examples and Figure 2, the ink composition was coated with beeswax in a coating step (C1), by heating the beeswax above the melting temperature of 70° and dipping a printed, dried composition (IC1.3), for example from example 2, into the beeswax twice, thus resulting in a coated molded body (IC1.4).

This coated molded body (IC1.4) was recycled according to the following exemplary procedure: The molding was coarsely crushed. Water was added to the sample to dissolve the components of the ink composition over 24 hours. Then the beeswax was separated from the dissolved components by filtration and washed twice (R1). The aqueous phase was dried at room temperature to obtain the ink components in solid form, which can be reused by following the procedure for preparing the ink composition according to example 1 (D1.2), thus creating the water-soluble ink composition (IC1.1) and closing the cycle.

### Example 5: Shear oscillation measurements

Example 5 is an exemplary embodiment of the preceding examples and related to Figure 3, showing the rheological properties, here shear rate, of an exemplary, water dissolved ink composition, herein IC(70/18/12/0):1. Shear oscillation measurements were conducted after four resting times (3, 30, 60, and 90 minutes) and are represented on a logarithmic scale, with the y-axis representing viscosity [Pa·s] and the x-axis representing shear rate [s⁻¹]. This demonstrates the effect of the increase of shear rate during the resting period of the composition, wherein this specific composition reaches the maximum of physical cross-linking after around 60 minutes, the effect being miniscule after longer resting periods. This illustrates the importance of the maturing step of the method for producing the water dissolved ink composition in the spirit of the current invention.

### Example 6: Shear oscillation measurements without cellulose derivate

Example 6 is an exemplary embodiment of the preceding examples and demonstrating the effect of the water-soluble cellulose derivative, herein not being present in a reference example of an ink composition not comprised by the current invention, herein IC(80/0/20/0):1. In contrast to example 5, no strong shear thinning behavior could be observed. Therefore, the inclusion of a water-soluble cellulose derivative as a theology-modifying component is necessary to provide an ink composition having the shear-thinning and liquid-solid crossover point disclosed herein.

### Example 7: Crossover point

Example 7 is an exemplary embodiment of the preceding examples and illustrates the transition point between the solid-like and liquid-like state of exemplary composition IC(70/18/12/0):1, shown in Figure 5. Here, G' and G" are correlated with the solid-like and liquid-like character of a polymer, respectively. When G' > G" (low oscillation strain), the ink composition behaves as a viscoelastic solid (as a result of physical crosslinking). At an oscillation strain of about 10%, a transition point is observed with G' = G". As the oscillation strain is increased, the ink properties are dominated by G" (G" > G') and the IC(70/18/12/0):1 behaves like a viscoelastic fluid. Consequently, during printing, the ink is subjected to a high strain with G" > G' and behaves in a liquid-like manner, flowing easily out of the nozzle. After printing, the shape of the printed objects is stabilized by the solid-like behavior of the ink at lower strain (G' > G").

### Example 8: Thermogravimetric measurements (TGA)

Example 8 is an exemplary embodiment of the preceding examples and relates to the water content and the thermal stability of the molded body, which was produced with a printing process from an exemplary composition IC(70/18/12/0):1. In this embodiment, the TGA measurements of the molded, dried body (more than 48 h at room temperature) shown in Figure 6 indicate a mass loss of 4.6% at 100 °C, which corresponds to the water content of the molded body. Further heating results in thermal decomposition with turning points at around 250 °C (associated with the evaporation of glycerol and 340 °C, associated with the decomposition of methylcellulose and associated with the release of sulfur dioxide during the thermal decomposition of lignosulfonate). The final carbonization of the printed structures begins at temperatures above 500 °C. This demonstrated thermal stability of the molded body is an important feature, as it ensures the material's resistance to deformation, cracking and structural degradation, making it a long-lasting and reliable choice for a wide range of applications.

### Example 9: Mechanical properties

Example 9 is an exemplary embodiment of the preceding examples and illustrates the mechanical properties of the molded body obtained by printing 4 different exemplary compositions (the compositions of Examples 1 and 2, E1-1 to E1-4). This shows the influence of the composition of the components of the ink composition, with which the mechanical properties of the molded body obtained can be adjusted and set (see Figure 7). The resulting Young's modulus (E) depends strongly on the ratio between the cellulose derivative (BB) and softening agent (CC), with a higher softening agent content reducing the Young's modulus. While the molded body with a high proportion of softening agent 18 wt%) has a very low elasticity modulus of 2.4 ± 0.6 MPa, the mechanical properties can be increased to up to E = 106.9 ± 17.3 MPa by reducing the softening agent content, in this example glycerol. The resulting materials are relatively flexible with elongation at break (*ε_{b}*) values between 18 and 26 %. This enables the use and design of molded bodies with defined mechanical properties obtained from an ink composition in the sense of the present invention in a variety of applications.

### Example 10: Drying of a printed ink composition

Example 10 is an exemplary embodiment of the preceding examples and illustrates drying kinetics of an exemplary ink composition (IC(70/18/12/0):1) directly after a printing process according to the current invention at room temperature. In this model, in this example a printed line, the composition loses water quickly at room temperature and after around 5 hours, the loss rate decreases and after 30 hours, no substantial water loss is seen. This allows the drying of the ink composition at room temperature, which is a great improvement over the state of the art, which often requires post processing.

### REFERENCE LIST

- S1.1: Storage vessel for lignosulfonate salt
- S1.2: Storage vessel for water-soluble cellulose derivative
- S1.3: Storage vessel for the biocompatible softening agent
- S1.4: Storage vessel for additional water-soluble additive
- S1.5: First storage vessel for water
- S1.6: Cartridge for water-dissolved ink composition
- S1.7: Second storage vessel for water
- M1.1: First mixing step
- D1.1: First dissolving step
- D1.2: Second grinding/dissolving step
- PT1: Pressure tank
- P1: Printing step
- T1: Treatment step (hardening)
- IC1.1: Water-dissolved ink composition
- IC1.2: Printed ink composition
- IC1.3: Hardened ink composition (molded body)
- IC1.4: Coated ink composition
- IC1.5: Uncoated ink composition
- C1: Coating step
- R1: Decoating step

## Claims

1. A recyclable **ink composition,** comprising the following components:
a) 50 to 90 wt% of a bio-derived polymer,
b) 5 to 30 wt% of a rheologic modifier,
c) 5 to 30 wt% of a biocompatible softening agent,
d) 0 to 5 wt% of an additional water-soluble additive,
**characterized in that**
the water-soluble bio-derived polymer is a lignosulfonate salt selected from the list consisting of sodium, potassium, calcium lignosulfonate or a combination thereof,
the rheologic modifier is a water-soluble cellulose derivative, wherein the water-soluble cellulose derivative has a solubility of 1.5 wt% to 30 wt% in water at 25 °C,
the components add up to 100 wt% of the composition, and
the composition is dissolved in water in a mass ratio of 2:1 to 1:2 (water:ink),
the water-dissolved composition is configured for 3D printing.

2. The ink composition of claim 1, wherein the ink exhibits a reduction in viscosity between 50% and 98% when the shear rate is increased from 0.1 s⁻¹ to 10 s⁻¹, as determined by shear oscillation measurement.

3. The ink composition according to claim 1 or 2, wherein the ink composition exhibits a crossover point in oscillatory shear measurements at an oscillation strain between 5% and 20%, such that at strains below the crossover point the storage modulus (G') exceeds the loss modulus (G"), and at strains above the crossover point the loss modulus (G") exceeds the storage modulus (G').

4. The ink composition according to any claims 1 to 3, wherein the water-soluble cellulose derivative is represented by the stoichiometric formula (C₆H₍₁₀₋ₓ₎RₓO₅)ₙ, wherein x is from 0.5 to 3, and wherein R is independently selected from the group consisting of methyl, ethyl, 2-hydroxypropyl, and oligo-2-hydroxypropyl, wherein oligo-2-hydroxypropyl denotes 2-hydroxypropyl side chains comprising from 1 to 5 repeating units.

5. The ink composition according to any claims 1 to 4, The ink composition according to any one of claims 1 to 4, wherein the biocompatible softening agent is selected from the group consisting of glycerin, citric acid alkyl esters or a combination thereof.

6. The ink composition according to any claims 1 to 5, wherein the lignosulfonate salt has a sulfur content of 2.0 to 10 wt%, as determined by elemental analysis.

7. A process for manufacturing an ink composition according to any of the claims 1 to 6, comprising:
a) providing the components,
b) Mixing and preferably grinding the components,
c) Dissolving the components in water, the
d) Maturing the solution for a fixed amount of time, preferably between 10 min and 5 h, then
e) Transfer the water dissolved ink composition into a storage container and/or directly printing the composition.

8. A process for printing a recyclable ink composition according to any one of claims 1 to 6, comprising:
a) Providing the water-dissolved ink composition according to any of the claims 1 to 6; preferably as an ink cartridge,
b) supplying a dispensing tip and a pressure source,
c) applying a pressure sufficient to induce a solid-to-liquid transition,
d) printing the water-dissolved ink composition using a printing machine at a nozzle velocity ranging from 0.5 mm/s to 10 mm/s; and
e) drying the printed ink composition to obtain a molded body by inducing a water loss of preferably between 90 and 99.9 wt%.

9. The process of claim 8, further comprising the step of applying a coating, preferably a wax coating, to the printed molded body after the drying step.

10. A printed molded body obtained directly from a recyclable ink composition according to any of claims 1 to 6 by a process according to any one of claims 8 or 9, wherein the printed molded body has a water content in a range of 0.1 to 7.5 wt%, as determined with thermogravimetric analysis (TGA).

11. The printed molded body according to claim 10, wherein the molded body has a tunable E-modulus (E) in the range of 2.0 MPa to 150 MPa, as determined with a universal tensile tester equipped with a temperature controlled chamber.

12. The printed molded body according to any one of claims 10 or 11, wherein the molded body has a porosity in the range of 5 % to 30 %, as determined with micro computed tomography (µCT).

13. The printed molded body according to any one of claims 10 to 12, further comprising a moisture-protective coating, preferably a wax coating.

14. A process for recycling a molded body according to any one of claims 10 to 13, comprising:
a) optionally removing the coating by a suitable stripping agent or process;
b) grinding the molded body; and
c) dissolving the ground molded body in water, preferably followed by removal of excess water to reestablish a water content corresponding to that of the recyclable ink composition of claim 1.

15. Use of an ink composition according to any one of claims 1 to 6 for printing a molded body according to any one of claims 10 to 13, wherein the molded body is fully recyclable and can be recycled to reobtain the original ink composition, thereby enabling a closed-loop recycling process.
